# DEMANDE DE BREVET EUROPEEN

(11) **EP 4 752 652 A1**
(43) Date de publication de la demande: **03.06.2026**
(21) Numéro de dépôt: 25213830.0
(22) Date de dépôt: 06.11.2025
(51) Int. Cl.: G05B 19/18, B21D 22/02, B21D 37/16

(54) **PROCÉDÉ DE CONTRÔLE D'UN ENTREFER ENTRE DEUX MATRICES D'UN OUTILLAGE DE FORMAGE À CHAUD**

(30) Priorité: 27.11.2024 FR 2413097
(71) Demandeur: AIRBUS OPERATIONS (S.A.S.), 31060 Toulouse (FR)
(72) Inventeur: ROYER, Aurélien, 31060 Toulouse (FR)
(74) Mandataire: Fantin, Laurent

(57) **Abrégé**

L'invention a pour objet un procédé de contrôle d'un entrefer entre des première et deuxième matrices (12, 14) d'un outillage de formage à chaud comprenant :
- une étape de positionnement d'au moins un accessoire de contrôle (20) entre les première et deuxième matrices (12, 14),
- une étape de compression de l'accessoire de contrôle (20) entre les première et deuxième matrices (12, 14) à une température égale à ou proche de la température de formage à chaud, l'accessoire de contrôle (20) étant configuré pour occuper des premier et deuxième états respectivement avant et après l'étape de compression dans lesquels l'accessoire de contrôle (20) présente respectivement au moins des première et deuxième caractéristiques,
- une étape de comparaison des première et deuxième caractéristiques de l'accessoire de contrôle (20), et
- une éventuelle étape de correction de l'entrefer en fonction de l'étape de comparaison.

## Description

La présente demande se rapporte à un procédé de contrôle d'un entrefer entre deux matrices d'un outillage de formage à chaud.

Un procédé de formage à chaud comprend, entre autres, une étape de chauffage d'une pièce brute, une étape de déformation visant à comprimer entre deux matrices la pièce brute chauffée puis une étape de refroidissement de la pièce déformée de manière à obtenir la pièce finale. Dans le cas d'une pièce en titane, la pièce à déformer et au moins les parties des deux matrices en contact avec la pièce à déformer sont portées à une température supérieure ou égale à 750°C.

La géométrie de la pièce finale dépend des faces de contact des deux matrices et plus particulièrement de l'espacement entre lesdites faces de contact, également appelé entrefer, lors de l'étape de déformation.

Lors du procédé de formage à chaud, les matrices et les faces de contact des matrices se déforment et se dilatent en raison de l'élévation de température. Ces phénomènes de dilatation et de déformation des matrices et des faces de contact sont difficilement quantifiables. Aussi, même si la géométrie des faces de contact des matrices est parfaitement connue à la température ambiante, la géométrie de ces faces de contact à la température de formage n'est pas parfaitement maîtrisable si bien que la géométrie de la pièce finale peut ne pas être conforme à la géométrie souhaitée. En cas de non-conformité, la pièce finale doit être reprise pour la rendre conforme à la géométrie souhaitée. Ces opérations de reprise augmentent la durée de fabrication et les coûts de production.

Selon un mode de réalisation de l'art antérieur décrit dans le document CNJP2011083790, l'entrefer est ajusté en introduisant une pièce pleine dont la géométrie est proche de la pièce à forger entre les deux matrices et en mesurant l'écart réel entre les deux matrices avec des outils de mesure intégrés dans l'une des matrices. Cette solution est complexe à mettre en œuvre car les mesures doivent être réalisées sur l'outillage de formage en chaud. De plus, la pièce utilisée pour réaliser ces mesures doit avoir des caractéristiques (volume, matière, ...) les plus proches de la pièce à forger pour que les mesures soient les lus réalistes possibles. Par conséquent, la pièce utilisée pour réaliser ces réglages a un coût relativement élevé.

La présente invention vise à remédier à tout ou partie des inconvénients de l'art antérieur. A cet effet, l'invention a pour objet un procédé de contrôle d'un entrefer entre au moins des première et deuxième matrices d'un outillage de formage à chaud utilisé pour conformer une pièce à une température de formage.

Selon l'invention, le procédé de contrôle comprend :
- une étape de positionnement d'au moins un accessoire de contrôle entre les première et deuxième matrices,
- une étape de compression de l'accessoire de contrôle entre les première et deuxième matrices à une température de contrôle égale à ou proche de la température de formage à chaud, l'accessoire de contrôle étant configuré pour occuper, dans au moins une zone accessoire de l'accessoire de contrôle correspondant à une zone considérée de l'entrefer, un premier état avant l'étape de compression dans lequel l'accessoire de contrôle présente au moins une première caractéristique ainsi qu'un deuxième état après l'étape de compression dans lequel l'accessoire de contrôle présente au moins une deuxième caractéristique,
- une étape de comparaison des première et deuxième caractéristiques de l'accessoire de contrôle
- une éventuelle étape de correction de l'entrefer au niveau de la zone considérée de l'entrefer en fonction de l'étape de comparaison.

En complément, l'accessoire de contrôle comprend au moins une pluralité d'éléments longilignes parallèles entre eux et orientés selon au moins une direction, chaque élément longiligne présentant avant l'étape de déformation une dimension non déformée et après l'étape de déformation une dimension de déformation, l'étape de comparaison consistant à déterminer une différence entre la dimension non déformée et la dimension de déformation puis à comparer cette différence avec un seuil donné.

Ce procédé de contrôle permet de contrôler l'entrefer à une température égale à ou proche de la température de formage et, si nécessaire, de corriger au moins l'une des première et deuxième matrices afin que l'entrefer soit dimensionné à la température de formage à chaud en fonction de la pièce à réaliser. Cette solution limite les risques de défauts de la pièce à réaliser et tend à supprimer les opérations de reprise.

Selon une autre caractéristique, l'accessoire de contrôle est sorti de l'entrefer après l'étape de déformation et avant l'étape de comparaison.

Selon une autre caractéristique, la zone considérée de l'entrefer est corrigée si une différence entre les première et deuxième caractéristiques au niveau de la zone accessoire de l'accessoire de contrôle est supérieure ou égale à un seuil donné.

Selon une autre caractéristique, lors de l'étape de mise en place, l'accessoire de contrôle est positionné selon une position connue par rapport à au moins l'une des première et deuxième matrices.

Selon une autre caractéristique, les étapes de compression et de comparaison sont réalisées au niveau de plusieurs zones accessoires de l'accessoire de contrôle correspondant à des zones différentes de l'entrefer.

Selon une autre caractéristique, l'accessoire de contrôle comprend une pluralité de premiers éléments longilignes parallèles entre eux et orientés selon une première direction ainsi qu'une pluralité de deuxièmes éléments longilignes parallèles entre eux et orientés selon une deuxième direction sécante avec la première direction.

Selon une autre caractéristique, l'accessoire de contrôle est une grille composée de premiers et deuxièmes éléments longilignes, les première et deuxième directions étant perpendiculaires entre elles.

Selon une autre caractéristique, les premiers éléments longilignes présentent une même première section sensiblement circulaire et/ou les premiers éléments longilignes sont espacés entre eux d'un premier pas régulier.

Selon une autre caractéristique, le premier pas est compris entre 4 et 15 mm et/ou la première section est circulaire et présente un diamètre compris entre 4 et 6 mm.

Selon une autre caractéristique, les deuxièmes éléments longilignes présentent une même deuxième section sensiblement circulaire et/ou les deuxièmes éléments longilignes sont espacés entre eux d'un deuxième pas régulier.

Selon une autre caractéristique, le deuxième pas est compris entre 4 et 15 mm et/ou la deuxième section est circulaire et présente un diamètre compris entre 4 et 6 mm.

Selon une autre caractéristique, l'accessoire de contrôle présente une ductibilité inférieure à celle des première et deuxième matrices.

D'autres caractéristiques et avantages ressortiront de la description de l'invention qui va suivre, description donnée à titre d'exemple uniquement, en regard des dessins annexés parmi lesquels :
- La figure 1 est une coupe transversale schématique d'un outillage de formage à chaud illustrant un mode de réalisation,
- La figure 2 est une vue de face d'un accessoire de contrôle illustrant un mode de réalisation de l'invention,
- La figure 3 est une coupe transversale de l'accessoire de contrôle visible sur la figure 2,
- La figure 4 est une coupe transversale schématique de l'accessoire de contrôle visible sur la figure 2 positionné dans l'outillage de formage à chaud visible sur la figure 1 illustrant un mode de réalisation de l'invention,
- La figure 5 est une coupe transversale élargie d'une partie de l'accessoire de contrôle visible sur la figure 2 positionné dans l'outillage de formage à chaud lors d'une étape de compression,
- La figure 6 est une coupe transversale d'une partie de l'accessoire de contrôle visible sur la figure 5 après l'étape de compression.

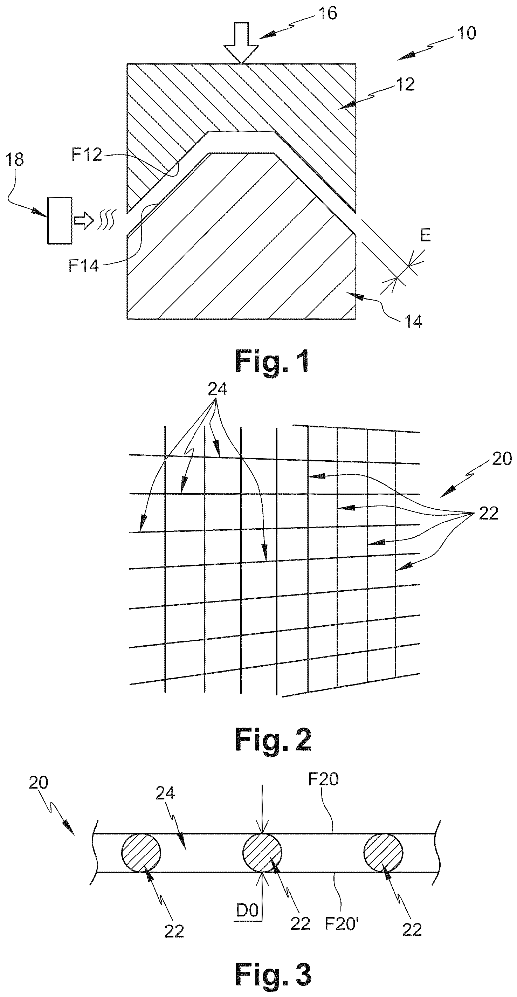

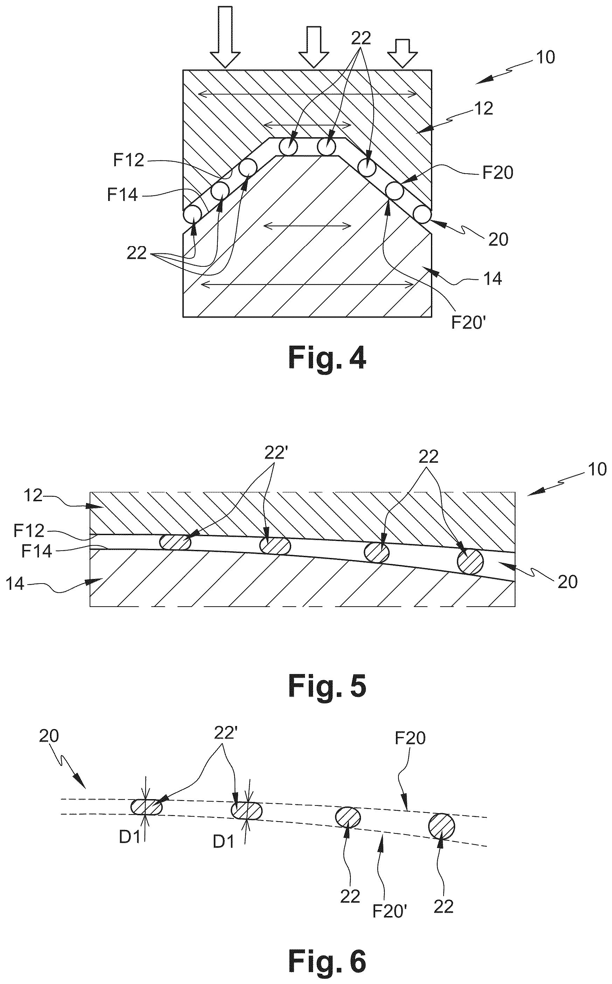

Selon un mode de réalisation visible sur les figures 1 et 4, un outillage de formage à chaud 10 comprend au moins des première et deuxième matrices 12, 14 présentant des première et deuxième faces de contact F12, F14 orientées l'une vers l'autre. La première face de contact F12 de la première matrice 12 présente une forme donnée. En complément, la deuxième face de contact F14 de la deuxième matrice présente une contre-forme correspondant à la forme donnée. Cet outillage de formage à chaud 10 présente également un système de compression 16 configuré pour rapprocher l'une vers l'autre les première et deuxième matrices 12, 14 ainsi qu'un système de chauffage 18 configuré pour chauffer au moins un environnement situé entre les première et deuxième faces de contact F12, F14 ainsi que les première et deuxième matrices 12, 14.

En fonctionnement, cet outillage de formage à chaud 10 est utilisé pour conformer une pièce et mettre en œuvre un procédé de formage à chaud qui comprend, entre autres, une étape de chauffage d'une pièce brute, une étape de déformation de la pièce brute chauffée en la comprimant entre les première et deuxième matrices dans des conditions de formage à chaud puis une étape de refroidissement de la pièce déformée de manière à obtenir la pièce finale.

Les conditions de formage à chaud comprennent, entre autres, une température de conformage correspondant à la température à laquelle est portée la pièce brute durant l'étape de déformation, une pression de conformage correspondant à la pression exercée par les première et deuxième matrices 12, 14 sur la pièce brute durant l'étape de déformation ainsi qu'une direction de compression correspondant à une direction selon laquelle se déplace au moins une des première et deuxième matrices 12, 14 lors de l'étape de déformation.

Selon une application, cet outillage de formage à chaud 10 est utilisé pour réaliser une pièce en titane. Selon cette application, la pièce à déformer et les parties des deux matrices en contact avec la pièce à déformer sont portées à une température supérieure à 750°C.

Les première et deuxième matrices 12, 14 et plus particulièrement les première et deuxième faces de contact F12, F14 sont conformées en fonction de la pièce à réaliser. Selon une application, la pièce à réaliser est une partie d'un mât d'aéronef comme un carénage arrière d'un mât de réacteur par exemple. Bien entendu, l'invention n'est pas limitée à cette application.

Quelle que soit l'application, la pièce à réaliser comprend des première et deuxième faces opposées. Les première et deuxième faces de contact F12, F14 sont conformées en fonction des première et deuxième faces de la pièce à réaliser et distantes d'un espacement appelé par la suite entrefer E. Selon un agencement, l'entrefer E est sensiblement constant sur au moins une partie de la superficie des première et deuxième faces de contact F12, F14.

L'outillage de formage à chaud 10 n'est pas plus décrit car il peut être identique à ceux de l'art antérieur.

Pour éviter que la pièce réalisée ne soit reprise, un procédé de contrôle de l'entrefer E à la température de formage est mis en œuvre.

Selon un mode de réalisation, le procédé de contrôle comprend une étape de mise en place d'au moins un accessoire de contrôle 20 entre les première et deuxième matrices 12, 14, une étape de compression de l'accessoire de contrôle 20 entre les première et deuxième matrices 12, 14, une étape de mesure d'au moins une dimension de déformation de l'accessoire de contrôle 20, une étape de comparaison de la dimension de déformation avec une dimension de référence ainsi qu'une éventuelle étape de correction d'au moins une des première et deuxième faces de contact F12, F14 en fonction de l'étape de comparaison.

Selon un mode opératoire, l'accessoire de contrôle 20 est sorti de l'entrefer E après l'étape de déformation par compression et avant l'étape de comparaison, préalablement à l'étape de mesure. L'accessoire de contrôle 20 n'étant plus positionné entre les première et deuxième matrices 12, 14, l'étape de mesure est simplifiée et peut être réalisée avec des outils de mesure simples.

Selon un mode de réalisation, l'accessoire de contrôle 20 comprend au moins une pluralité d'éléments longilignes 22 parallèles entre eux et orientés selon au moins une direction. Selon une configuration, l'accessoire de contrôle 20 comprend une pluralité de premiers éléments longilignes 22 parallèles entre eux et orientés selon une première direction ainsi qu'une pluralité de deuxièmes éléments longilignes 24 parallèles entre eux et orientés selon une deuxième direction sécante avec la première direction. Selon un agencement privilégié, les première et deuxième directions sont perpendiculaires entre elles.

Les premiers éléments longilignes 22 présentent une même première section sensiblement circulaire. Les premiers éléments longilignes 22 sont espacés entre eux d'un premier pas régulier et identique entre les différents premiers éléments longilignes 22.

Les deuxièmes éléments longilignes 24 présentent une même deuxième section sensiblement circulaire. Les deuxièmes éléments longilignes 24 sont espacés entre eux d'un deuxième pas régulier et identique entre les différents deuxièmes éléments longilignes 24.

Selon une configuration, les premier et deuxième pas sont identiques et/ou les première et deuxième sections sont identiques. Le premier pas est compris entre 4 et 15 mm. Le deuxième pas est compris entre 4 et 15 mm La première section est circulaire et présente un diamètre compris entre 4 et 6 mm. La deuxième section est circulaire et présente un diamètre compris entre 4 et 6 mm.

Selon un mode de réalisation visible sur la figure 2, l'accessoire de contrôle 20 est une grille composée de premiers et deuxièmes éléments longilignes 22, 24 perpendiculaires entre eux. Selon une configuration, l'accessoire de contrôle 20 présente une ductibilité inférieure à celle des première et deuxième matrices 12, 14 pour ne pas marquer les première et deuxième faces de contact F12, F14 lors du procédé de contrôle de l'entrefer E. Selon un mode de réalisation, l'accessoire de contrôle 20 est en acier ou en alliage de cuivre.

Selon une configuration, l'accessoire de contrôle 20 est un élément surfacique qui présente des première et deuxième faces F20, F20' opposées, en contact en fonctionnement respectivement avec au moins une partie des première et deuxième faces de contact F12, F14 des première et deuxième matrices 12, 14.

Lors de l'étape de mise en place, l'accessoire de contrôle 20 est positionné selon une position connue par rapport à au moins l'une des première et deuxième matrices 12, 14. Ainsi, à chaque zone de la première face F20 de l'accessoire de contrôle 20 correspond une zone de la première face de contact F12 de la première matrice 12 et à chaque zone de la deuxième face F20' de l'accessoire de contrôle 20 correspond une zone de la deuxième face de contact F14 de la deuxième matrice 14. Ces zones sont définies comme étant des zones accessoires. Plus généralement, à chaque zone accessoire de l'accessoire de contrôle 20 correspond une zone de l'entrefer E située entre les première et deuxième matrices 12, 14.

Selon un mode opératoire, lors de l'étape de compression, l'accessoire de contrôle 20 est comprimé entre les première et deuxième matrices 12, 14 dans des conditions égales à ou proches des conditions de formage à chaud. Quel que soit le mode opératoire lors de l'étape de compression, l'accessoire 20 est comprimé entre les première et deuxième matrices 12, 14 à une température de contrôle égale à ou proche de la température de formage à chaud. On considère que la température de contrôle est proche de la température de formage à chaud si la différence entre ces températures est inférieure ou égale à 100°C.

Comme illustré sur la figure 5, lors de l'étape de compression, au moins un élément longiligne 22' parmi les premiers et deuxièmes éléments longilignes 22, 24 est déformé. Chaque élément longiligne 22' présente avant l'étape de déformation une dimension non déformée D0 qui correspond à la dimension de référence et après l'étape de déformation une dimension de déformation D1. L'étape de comparaison consiste à comparer la dimension non déformée D0 et la dimension de déformation D1 puis à déterminer un écart correspondant à la différence entre la dimension non déformée D0 et la dimension de déformation D1.

Selon un mode opératoire, les étapes de compression et de comparaison sont opérées au niveau de plusieurs zones accessoires de l'accessoire de contrôle 20. Pour chaque zone accessoire, l'étape de comparaison consiste à déterminer une différence entre la dimension non déformée D0 et la dimension de déformation D1 puis à comparer cette différence avec un seuil donné. Ce seuil peut être égal à 0 ou être non nul et égal à un pourcentage de la dimension non déformée D0 par exemple.

Connaissant la position de l'accessoire de contrôle 20 par rapport aux première et deuxième matrices 12, 14 lors de l'étape de compression, l'étape de correction consiste à corriger la géométrie d'au moins une des faces de contact F12, F14 des première et deuxième matrices 12, 14 au niveau de chaque zone de l'entrefer E correspondant à une zone accessoire de l'accessoire de contrôle 20 au niveau de laquelle la différence entre la dimension non déformée D0 et la dimension de déformation D1 est supérieure ou égale au seuil donné.

Avant l'étape de compression, chacune des première et deuxième faces F20, F20' de l'accessoire de contrôle 20 présente une géométrie non déformée. Après l'étape de compression, au moins une des première et deuxième faces F20, F20' de l'accessoire de contrôle 20 présente une géométrie déformée.

Selon un autre mode opératoire, pour chaque zone accessoire de l'accessoire de contrôle 20, l'étape de comparaison consiste à déterminer pour chacune des première et deuxième faces F20, F20' une différence entre la géométrie non déformée et la géométrie déformée puis à comparer cette différence avec un seuil donné.

Connaissant la position de l'accessoire de contrôle 20 par rapport aux première et deuxième matrices 12, 14 lors de l'étape de compression, l'étape de correction consiste à corriger :
- la géométrie de chaque zone de la première face de contact F12 correspondant à une zone de la première face F20 de l'accessoire de contrôle 20 au niveau de laquelle la différence entre la géométrie non déformée et la géométrie déformée est supérieure ou égale au seuil donné,
- la géométrie de chaque zone de la deuxième face de contact F14 correspondant à une zone de la deuxième face F20' de l'accessoire de contrôle 20 au niveau de laquelle la différence entre la géométrie non déformée et la géométrie déformée est supérieure ou égale au seuil donné.

Quel que soit le mode de réalisation, l'accessoire de contrôle 20 est configuré pour occuper, dans au moins une zone accessoire de l'accessoire de contrôle 20 correspondant à une zone considérée de l'entrefer E, un premier état avant l'étape de compression dans lequel l'accessoire de contrôle présente au moins une première caractéristique ainsi qu'un deuxième état après l'étape de compression dans lequel l'accessoire de contrôle 20 présente au moins une deuxième caractéristique.

Quel que soit le mode opératoire, le procédé de contrôle de l'entrefer E entre les première et deuxième matrices 12, 14 comprend une étape de positionnement d'au moins un accessoire de contrôle 20 entre les première et deuxième matrices 12, 14, une étape de compression de l'accessoire de contrôle 20 entre les première et deuxième matrices 12, 14 à une température de contrôle égale à ou proche de la température de formage à chaud, une étape de comparaison, sur la zone accessoire de l'accessoire de contrôle 20 positionnée au niveau de la zone considérée de l'entrefer E lors de l'étape de compression, des première et deuxième caractéristiques de l'accessoire de contrôle 20 et une éventuelle étape de correction de l'entrefer E au niveau de la zone considérée de l'entrefer E en fonction de l'étape de comparaison. Selon un mode opératoire, la zone considérée de l'entrefer E est corrigée si une différence entre les première et deuxième caractéristiques au niveau de la zone accessoire de l'accessoire de contrôle 20 correspondant à la zone considérée de l'entrefer E est supérieure ou égale à un seuil donné. Les étapes de compression et de comparaison sont réalisées au niveau de plusieurs zones accessoires de l'accessoire de contrôle 20 correspondant à des zones différentes de l'entrefer E, l'étape de correction au niveau de chaque zone considérée de l'entrefer E étant réalisée en fonction de l'étape de comparaison réalisée au niveau de la zone accessoire correspondant à la zone considérée de l'entrefer E.

Le procédé de contrôle de l'entrefer E permet de le contrôler à la température de formage ou proche de cette dernière. Par conséquent, il est possible, si nécessaire, de corriger au moins l'une des première et deuxième matrices 12, 14 afin que l'entrefer E soit dimensionné à la température de formage à chaud en fonction de la pièce à réaliser. Cette solution limite les risques de défauts de la pièce à réaliser et tend à supprimer les opérations de reprise.

Selon un mode opératoire, l'étape de correction consiste à usiner au moins une des faces de contact F12, F14 des première et deuxième matrices 12, 14 d'une valeur égale à la différence entre la dimension non déformée D0 et la dimension de déformation D1 ou à la différence entre la géométrie non déformée et la géométrie déformée.

Selon un autre mode de réalisation, au moins une des première et deuxième faces de contact F12, F14 comprend un revêtement qui est rechargé en fonction de son usure. Dans ce cas, préalablement à une étape de rechargement, un procédé de contrôle de l'entrefer E est mis en œuvre afin de déterminer l'épaisseur du revêtement à appliquer au droit des différentes zones de chacune des première et deuxième faces de contact F12, F14. Ce mode de réalisation présente l'avantage d'augmenter la durée d'utilisation des première et deuxième matrice 12, 14.

Bien entendu, l'invention n'est pas limitée à ces solutions pour l'étape de correction.

## Revendications

1. Procédé de contrôle d'un entrefer (E) entre au moins des première et deuxième matrices (12, 14) d'un outillage de formage à chaud utilisé pour conformer une pièce à une température de formage, **caractérisé en ce que** le procédé de contrôle comprend une étape de positionnement d'au moins un accessoire de contrôle (20) entre les première et deuxième matrices (12, 14) et une étape de compression de l'accessoire de contrôle (20) entre les première et deuxième matrices (12, 14) à une température de contrôle égale à ou proche de la température de formage à chaud ; l'accessoire de contrôle (20) étant configuré pour occuper, dans au moins une zone accessoire de l'accessoire de contrôle (20) correspondant à une zone considérée de l'entrefer (E), un premier état avant l'étape de compression dans lequel l'accessoire de contrôle (20) présente au moins une première caractéristique ainsi qu'un deuxième état après l'étape de compression dans lequel l'accessoire de contrôle (20) présente au moins une deuxième caractéristique, le procédé de contrôle comprenant une étape de comparaison des première et deuxième caractéristiques de l'accessoire de contrôle (20) et une éventuelle étape de correction de l'entrefer (E) au niveau de la zone considérée de l'entrefer (E) en fonction de l'étape de comparaison, et **en ce que** l'accessoire de contrôle (20) comprend au moins une pluralité d'éléments longilignes (22) parallèles entre eux et orientés selon au moins une direction, chaque élément longiligne (22) présentant avant l'étape de déformation une dimension non déformée (D0) et après l'étape de déformation une dimension de déformation (D1), l'étape de comparaison consistant à déterminer une différence entre la dimension non déformée (D0) et la dimension de déformation (D1) puis à comparer cette différence avec un seuil donné.

2. Procédé de contrôle selon la revendication précédente, **caractérisé en ce que** l'accessoire de contrôle (20) est sorti de l'entrefer (E) après l'étape de déformation et avant l'étape de comparaison.

3. Procédé de contrôle selon l'une des revendications précédentes, **caractérisé en ce que** la zone considérée de l'entrefer (E) est corrigée si une différence entre les première et deuxième caractéristiques au niveau de la zone accessoire de l'accessoire de contrôle (20) est supérieure ou égale à un seuil donné.

4. Procédé de contrôle selon l'une des revendications précédentes, **caractérisé en ce que**, lors de l'étape de mise en place, l'accessoire de contrôle (20) est positionné selon une position connue par rapport à au moins l'une des première et deuxième matrices (12, 14).

5. Procédé de contrôle selon l'une des revendications précédentes, **caractérisé en ce que** les étapes de compression et de comparaison sont réalisées au niveau de plusieurs zones accessoires de l'accessoire de contrôle (20) correspondant à des zones différentes de l'entrefer (E).

6. Procédé de contrôle selon l'une des revendications précédentes, **caractérisé en ce que** l'accessoire de contrôle (20) comprend une pluralité de premiers éléments longilignes (22) parallèles entre eux et orientés selon une première direction ainsi qu'une pluralité de deuxièmes éléments longilignes (24) parallèles entre eux et orientés selon une deuxième direction sécante avec la première direction.

7. Procédé de contrôle selon la revendication précédente, **caractérisé en ce que** l'accessoire de contrôle (20) est une grille composée de premiers et deuxièmes éléments longilignes (22, 24), les première et deuxième directions étant perpendiculaires entre elles.

8. Procédé de contrôle selon l'une des revendications 6 à 7, **caractérisé en ce que** les premiers éléments longilignes (22) présentent une même première section sensiblement circulaire et/ou les premiers éléments longilignes (22) sont espacés entre eux d'un premier pas régulier.

9. Procédé de contrôle selon l'une des revendications 6 à 8, **caractérisé en ce que** les deuxièmes éléments longilignes (24) présentent une même deuxième section sensiblement circulaire et/ou les deuxièmes éléments longilignes (24) sont espacés entre eux d'un deuxième pas régulier.

10. Procédé de contrôle selon l'une des revendications précédentes, **caractérisé en ce que** l'accessoire de contrôle (20) présente une ductibilité inférieure à celle des première et deuxième matrices (12, 14).
